# EUROPEAN PATENT APPLICATION

(11) **EP 1 329 656 A2**
(43) Date of publication of application: **23.07.2003**
(21) Application number: 03001099.5
(22) Date of filing: 20.01.2003
(51) Int. Cl.: F16K 11/074

(54) **Distribution device to distribute a drive fluid for actuators, advantageously of a tank truck**

(30) Priority: 21.01.2002 IT UD20020010
(71) Applicant: Allestimenti Pompe Moro SpA, 33080 Fiume Veneto (PN) (IT)
(72) Inventor: Diana, Giorgio, 33080 Bannia Di Fiume Veneto (PN) (IT)
(74) Representative: Petraz, Gilberto Luigi

(57) **Abstract**

Distribution device (10) to distribute a drive fluid for actuators (21, 22, 23, 25) able to move mechanical members, wherein a first fixed part (31) is connected to a container (17) containing the drive fluid, and a second rotary part (32) cooperates with the first fixed part (31) and is connected to each of the actuators (21, 22, 23, 25).

## Description

### FIELD OF THE INVENTION

The present invention concerns a distribution device for the distribution of a drive fluid, such as for example oil or suchlike, for actuator members.

The invention is applied preferentially, but not exclusively, in tank trucks, or similar means of transport, equipped for draining cesspits, septic tanks, sewers in general or suchlike, or in other similar or comparable means.

To be more exact, the invention is applied for the continuous feed of such fluid to energize actuator members, such as for example those able to move a turntable with which a suction tube and/or its auxiliary equipment is associated, such as for example a mechanical arm to lift the suction tube, a device to recover the suction tube, or reel, or otherwise.

The device according to the present invention is able to allow the turntable to continuously perform an angle of 360°, still keeping both the reel and its auxiliary equipment constantly fed.

### BACKGROUND OF THE INVENTION

It is known that tank trucks, especially those adapted to carry out drainage operations on cesspits, septic tanks, sewers or suchlike, comprise a suction tube which is normally made to rotate by a turntable on a horizontal plane in order to reach the various points wherein the suction must be applied.

This tube also has other types of movements, independent of each other, for example to vary the length and/or inclination and/or vertical position thereof, and/or for other functions necessary for the correct positioning of the suction tube with respect to the zone in which it is made to operate.

All these movements are normally carried out by relative hydraulic, linear or circular actuators which, at the moment of activation, must be fed by an actuator or feed fluid.

The feed of the hydraulic actuators is normally managed by means of one or more distribution devices able to allow the actuator fluid, for example oil, to reach the relative actuator. Such devices provide an element attached to the cistern of the tank truck, by means of which the oil, which is fed from a container mounted on the tank truck, is made to flow in pipes connected to the various actuators.

The fixed position of the distribution device with respect to the turntable, and the presence of suction tubes, do not allow, however, the turntable to continuously perform an angle of 360°. In fact, even by providing pipes which are much longer than the distance between the point of distribution and the position of the relative actuator, the maximum rotation admissible is about 270°÷300°; if the rotation is any greater the pipes twist against each other and create considerable problems in the correct feed.

This shortcoming is particularly harmful especially in the case where the tank truck has to operate in conditions of limited space, for example in a narrow street, and where it is necessary to rotate the turntable to take the suction tube to operate from one side of the truck to the other. Since the operator cannot completely rotate the turntable, he is often obliged to maneuver the entire tank truck in order to perform the desired suction operations.

The Applicant has devised and embodied the present invention to overcome these shortcomings of the state of the art and to obtain further advantages.

### SUMMARY OF THE INVENTION

The present invention is set forth and characterized in the main claim, while the dependent claims describe other innovative characteristics of the invention.

One purpose of the invention is to achieve a distribution device to distribute a drive fluid for actuators which will allow mechanical work members, on which the actuators are mounted, to continuously rotate through angles of 360°, keeping the actuators constantly fed with the drive fluid.

In accordance with this purpose, the distribution device according to the present invention comprises a first fixed part connected to a container for the drive fluid, and a second rotary part, cooperating with the first fixed part, connected to every actuator.

The second movable part of the device according to the invention rotates together with the actuators, so that the connection means present between the distributor and the actuators do not limit the amplitude of the rotation of the mechanical work members.

The first fixed part advantageously comprises a cylindrical element with which a tubular element constituting the second rotary part is associated rotatably, externally and coaxially.

The constant feed of the drive liquid is ensured by seatings and grooves arranged circumferentially facing each other, between the first fixed part and the second rotary part.

According to another characteristic of the present invention, the first fixed part is axially hollow, and the suction tube engages on it; this allows to combine in a single element both the fluid distributor and also the connection between the suction tube and the inside of the cistern, thus considerably limiting the space occupied.

A further advantage is that the feed pipes for the actuators can be much shorter, thus reducing problems of interference, twists in the path of the fluid and loss of pressure.

### BRIEF DESCRIPTION OF THE DRAWINGS

These and other characteristics of the present invention will become apparent from the following description of a preferential form of embodiment, given as a non-restrictive example with reference to the attached drawings wherein:
- fig. 1 is a side view of the device applied to a mechanical work member of a tank truck;
- fig. 2 is a partly sectioned side view of the device in fig. 1;
- fig. 3 shows the first fixed part of the device in fig.
   2;
- fig. 4 shows an enlarged detail of fig. 3;
- fig. 5 shows the second rotary part of the device in fig. 2;
- fig. 6 shows an enlarged detail of fig. 5.

### DETAILED DESCRIPTION OF A PREFERENTIAL FORM OF EMBODIMENT OF THE INVENTION

With reference to the attached figures, a distribution device 10 for the distribution of an actuator fluid, for example oil, is mounted on the upper rear part of a cistern 11 of a tank truck, not shown in the drawings, for example of the type used to drain cesspits, septic tanks, sewers in general or suchlike.

To be more exact, this device is mounted in correspondence with the axis of rotation X of a reel 13, which is able to wind/unwind a suction tube 15.

At the base of the reel 13 a turntable 14 is associated, rotating through 360° around the axis X; a mechanical arm 16 able to direct the tube 15, in order to reach the desired zones, is associated with the turntable 14. In fact, this arm 16 can assume, in a conventional manner, a plurality of vertical inclinations by means of a first linear actuator 21, or can be selectively lengthened by means of a second linear actuator 22. The tube 15 can also be extracted by means of a motor 25 associated with at least a wheel 26 arranged on the arm 16.

Apart from rotating individually by means of a first hydraulic motor 23 associated with the turntable 14, the reel 13 can also rotate together with the mechanical arm 16 by means of a second hydraulic motor 24 associated with the cistern 11.

The actuators 21 and 22, the first motor 23 and the motor 25 are fed with oil under pressure by means of the distributor 10 which is fed by the oil taken from a container 17 mounted on the tank truck, in this case in a rear zone near the cistern 11; the second motor 24, which is attached to the cistern 11, is fed directly by means of a valve 27 connected to a pump 28 which takes the oil from the container 17.

The distributor 10 substantially consists of a first fixed part 31, connected by means of a tube 18 to the valve 27, and a second rotary part 32 connected to the various actuators 21, 22, 23 and 25.

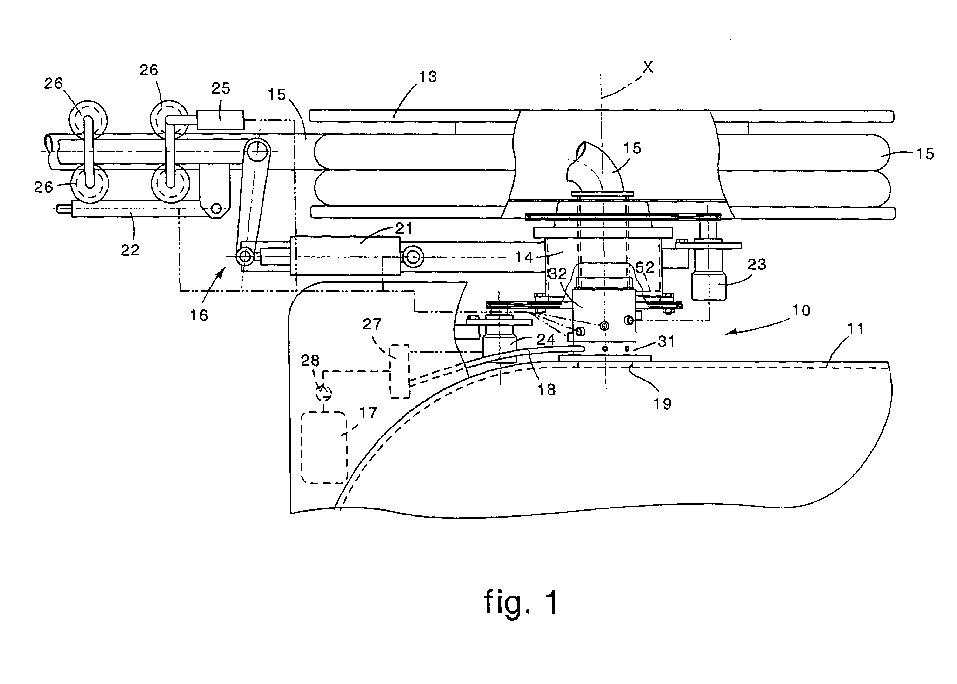

For the sake of simplifying the drawing, in fig. 1 the connections between the rotary part 32 and the actuators 21, 22, 23 and 25 have been indicated schematically with a line of dots and dashes, but it must be understood that such connections in reality are made with suitable connection tubes.

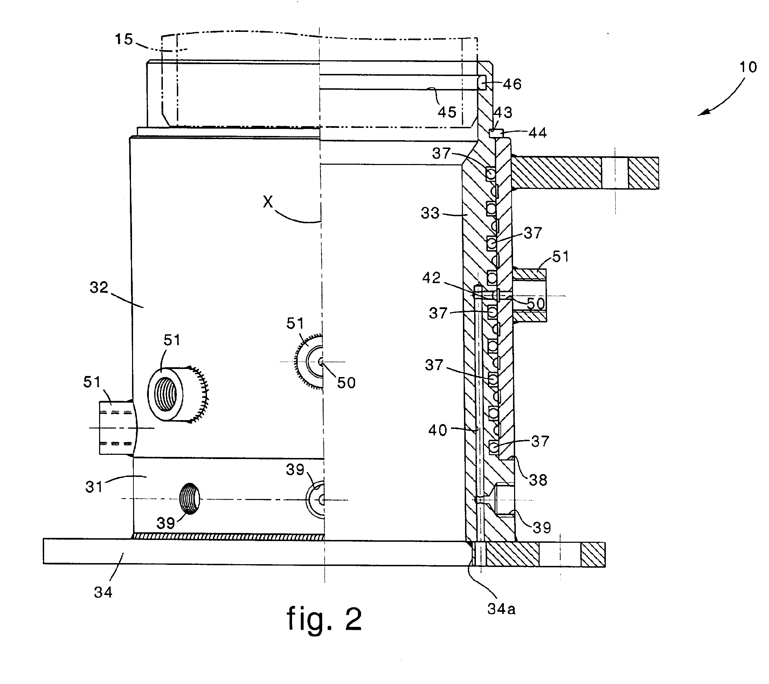

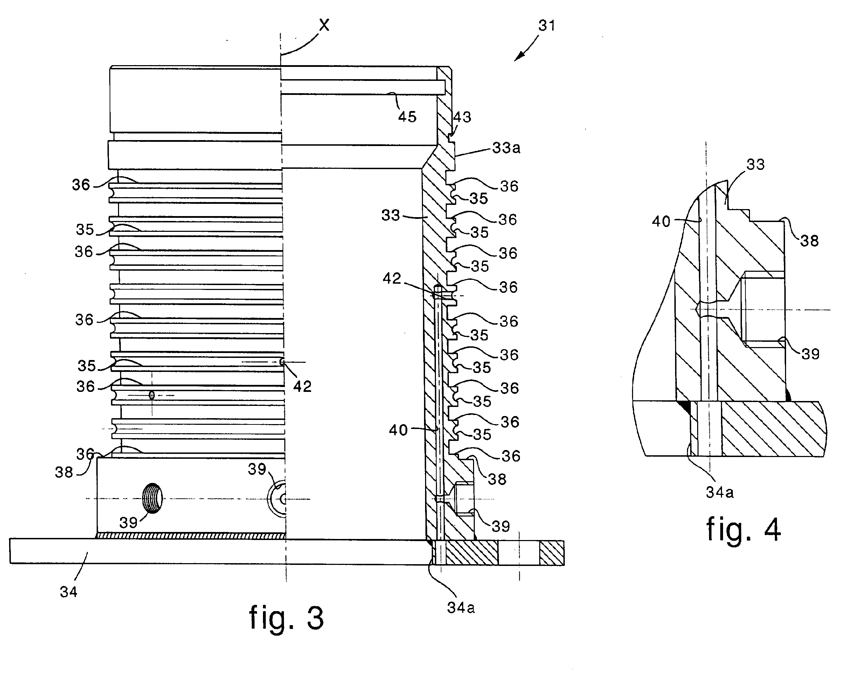

The first fixed part 31 (figs. 2 and 3) comprises a cylindrical element 33, axially hollow, to the lower edge of which is welded a flange 34 equipped with an axial hole 34a, and able to allow to attach the device 10, for example by means of screws, to the tank truck to which it is applied. The axial hole 34a faces a corresponding hole 19 made on the cistern 11 so as to create a direct connection between the hollow part of the fixed part 31 and the inside of the cistern 11.

A circular outer surface 33a of the cylindrical element 33 has a plurality of circumferential hollows 35 with a semi-circular section, parallel to each other, with which a plurality of circumferential seatings 36 alternate, parallel to the hollows 35, with a substantially rectangular section, inside which annular sealing packings 37 are positioned.

Below, again on the outer surface 33a, there is a protruding band able to define an abutment step 38, including threaded holes 39 perpendicular to the axis of rotation of the cylindrical element 33 and equal in number to the hollows 35.

Each hole 39 intersects a respective vertical pipe 40 (figs. 3 and 4), which has the upper part intersecting orthogonally with a horizontal segment 42 which leads into a respective hollow 35.

Moreover, above the hollows 35 and the seatings 36 a circumferential outer seating 43 is provided for the positioning of a metal sealing ring 44.

The trailing end of the tube 15 is able to be engaged in the hollow part of the cylindrical element 33, and a circumferential inner seating 45 is provided for the positioning of a respective sealing packing 46 which prevents the liquids arriving from the tube 15, and the tube 15 itself, from coming out of the device 10.

This solution allows to join the distributor 10 to the discharge pipe which normally connects the tube 15 with the inside of the cistern 11.

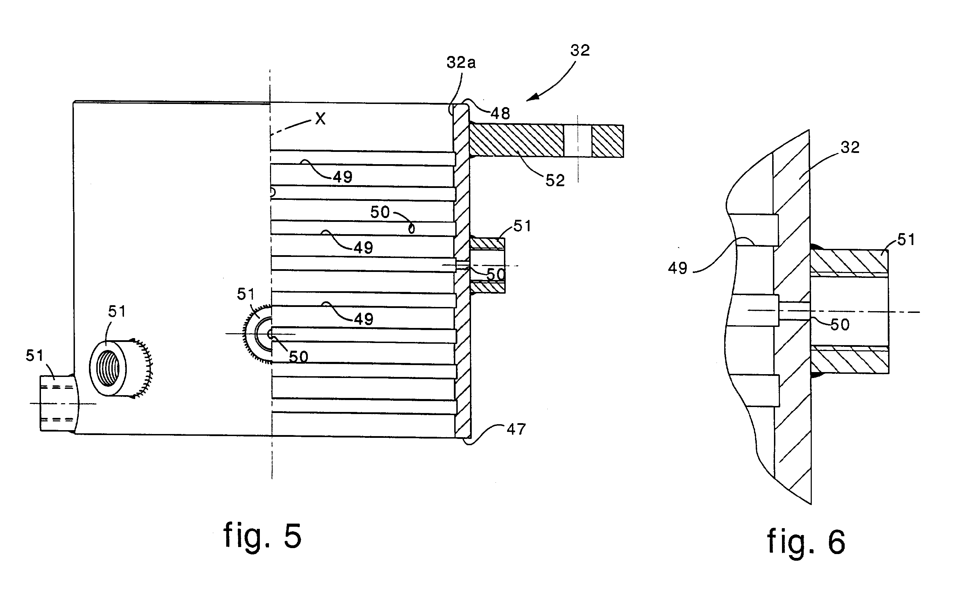

The second rotary part 32 (figs. 5 and 6) is substantially tubular in shape and has an inner diameter mating with the outer diameter of the cylindrical element 33 of the fixed part 31 on which it is coaxially and rotatably mounted.

The second part has a lower edge 47 able to rest on the abutment step 38 of the outer surface 33a of the cylindrical element 33, and an upper edge 48 which cooperates with the metal sealing ring 44, so that the rotary part 32 is longitudinally constrained with respect to the fixed part 31.

A cylindrical inner surface 32a has circumferential grooves 49 substantially parallel to each other and equal in number to the hollows 35 made on the surface 33a of the cylindrical element 33, so that every groove 49 coincides circumferentially with a respective hollow 35.

Each groove 49 comprises an outlet hole 50 able to make the inside communicate with the outside of the rotary part 32.

On the outer surface of the rotary part 32, coaxially with every outlet hole 50, respective engagement elements 51 are mounted, which substantially consist of metal tube elements with a threaded inner cavity, and able to be connected with the connection tubes which connect the rotary part 32 with the actuators 21, 22, 23 and 25.

According to a variant, the threading of the engagement elements 51 can also be made on the outside of the tube element.

A connection element 52 is also associated with the outer surface, and is able to connect the rotary part 32 with the turntable 14, so that the two rotate together.

The distribution device 10 to distribute drive fluid as described heretofore is used as follows.

The device 10 is connected by means of the flange 34 to the cistern 11 of the tank truck and, by means of the tube 18, to the valve 27.

The tube 18 is engaged in the threaded holes 39 to allow the oil to flow through the respective vertical pipes 40, so that it can reach, through the corresponding horizontal segments 42, the respective grooves 49 and the respective circumferential seatings 36.

In this way the oil reaches the respective outlet hole 50 from which it is then directed, through the engagement elements 51 and tubes, not shown here, towards the various actuators 21, 22, 23 and 25.

Since the seatings 36 and the grooves 49 are circumferential and facing each other, the rotary part 32 can rotate freely and fully through 360° with respect to the fixed part 31, allowing the oil to constantly enter from the threaded hole 39 and exit from the engagement element 51.

The rotation of the rotary part 32 with respect to the fixed part 31 and the connection made by the connection element 52 with the turntable 14 also allow the connection tubes between said rotary part 32 and the respective actuators 21, 22, 23 and 25 to rotate together with the latter, so that these tubes do not twist during the rotation of the turntable 14, thus allowing the latter to make any number of complete rotations around the axis of rotation X.

It is clear, however, that modifications and/or additions of parts may be made to the distribution device 10 as described heretofore, without departing from the field and scope of the present invention.

It is also clear that, although the present invention has been described with reference to specific examples, a person of skill in the art shall certainly be able to achieve many other equivalent forms of distribution device to distribute a drive fluid for actuators of a tank truck, all of which shall come within the field of protection of the present invention.

## Claims

1. Distribution device to distribute a drive fluid for actuators (21, 22, 23, 25) able to move mechanical members, **characterized in that** it comprises a first fixed part (31) connected to a container (17) for said drive fluid, and a second rotary part (32) cooperating with said first fixed part (31) and connected to each of said actuators (21, 22, 23, 25).

2. Device as in claim 1, **characterized in that** said first fixed part (31) comprises a cylindrical element (33) associated at its lower part with anchorage means (34).

3. Device as in claim 2, **characterized in that** said rotary part comprises a tubular element (32) mounted rotatable, outside and coaxially to said cylindrical element (33).

4. Device as in claim 2, **characterized in that** said cylindrical element (33) is axially hollow and is associated with the terminal part of a suction tube (15) to convey liquids sucked in by means of said tube (15) inside a cistern (11).

5. Device as in claim 4, **characterized in that** said anchorage means comprise a flange (34) having an axial hole (34a) facing an aperture (19) communicating with the inside of said cistern (11).

6. Device as in claims 4 and 5, **characterized in that** said cylindrical element (33) comprises a circumferential inner seating (45) for a sealing packing (46) able to cooperate with said terminal part of said suction tube (15).

7. Device as in claim 2, **characterized in that** said cylindrical element (33) comprises a circular outer surface (33a) on which a plurality of circumferential hollows (35) are made and connected with each of said actuators (21, 22, 23, 25), by means of suitable pipes, for the distribution of said drive fluid.

8. Device as in claim 7, **characterized in that** said circular outer surface (33a) comprises circumferential seatings (36) located between said circumferential hollows (35) and able to house annular sealing packings (37).

9. Device as in claim 7, **characterized in that** said circular outer surface (33a) comprises on its lower part threaded holes (39), connected by means of a pump (28) to said container (17), and equal in number to said circumferential hollows (35), said holes (39) being associated with respective pipes (40, 42) terminating in a respective circumferential hollow (35) in order to feed the drive fluid of a respective actuator (21, 22, 23, 25).

10. Device as in claim 9, **characterized in that** said second rotary part (32) comprises an inner surface (32a) provided with circumferential grooves (49) substantially parallel to each other and equal in number to said circumferential hollows (35) and facing them circumferentially, each of said circumferential grooves (49) comprising an outlet hole (50) able to make the inside communicate with the outside of said second rotary part (32).

11. Device as in claim 10, **characterized in that** on the outer surface of said second rotary part (32), coaxially with every outlet hole (50), respective engagement holes (51) are provided able to be connected with connection tubes which connect said second rotary part (32) with said actuators (21, 22, 23, 25).

12. Device as in claim 7, **characterized in that** said circular outer surface (33a) comprises at the upper part a circumferential outer seating (43) able to house mechanical sealing means (44).

13. Device as in claim 11, **characterized in that** said second rotary part (32) comprises a resting lower edge (47) and an upper edge (48) able to cooperate with said mechanical sealing means (44) in order to prevent said second rotary part (32) from sliding axially with respect to said cylindrical element (33).

14. Device as in claim 11, **characterized in that** said second rotary part (32) comprises a connection element (52) able to make said second rotary part (32) and said mechanical members solid, so as to make them rotate together.
